# EUROPEAN PATENT SPECIFICATION

(11) **EP 2 520 080 B1**
(45) Date of publication and mention of the grant of the patent: **02.08.2017**
(21) Application number: 10840469.0
(22) Date of filing: 01.12.2010
(51) Int. Cl.: H04N 5/335, H04N 5/355

(54) **METHOD FOR READING OUT HIGH DYNAMIC RANGE IMAGE FRAME IN IMAGE SENSOR AND DEVICE USING THE SAME**
VERFAHREN ZUM AUSLESEN EINES EINZELBILDES MIT HOCHDYNAMISCHEM BEREICH IN EINEM BILDSENSOR UND VORRICHTUNG DAMIT
PROCÉDÉ DE LECTURE D'UNE TRAME D'IMAGE À HAUTE PORTÉE DYNAMIQUE DANS UN CAPTEUR D'IMAGE ET DISPOSITIF L'UTILISANT

(30) Priority: 30.12.2009 CN 200920262266 U; 27.07.2010 CN 201010240370
(43) Date of publication of application: 07.11.2012
(73) Proprietor: BYD Company Limited, Shenzhen, Guangdong 518118 (CN); Shenzhen BYD Auto R&D Company Limited, Shenzhen, Guangdong 518118 (CN)
(72) Inventor: QIN, Zhi, Guangdong 518118 (CN); FU, Jingjun, Guangdong 518118 (CN); HU, Wenge, Guangdong 518118 (CN)
(74) Representative: Gulde & Partner
(86) International application number: PCT/CN2010/079357
(87) International publication number: WO 2011/079680

(56) References cited:
- WO-A1-97/17800
- WO-A1-2009/099116
- CN-A- 101 060 593
- CN-U- 201 623 774
- US-A1- 2006 011 810
- US-A1- 2007 222 877

## Description

### TECHNICAL FIELD

The present disclosure generally relates to an image sensor, more particularly to a method for reading out a high dynamic range image frame in an image sensor and a device using the same.

### BACKGROUND

Nowadays, the method for obtaining a high dynamic range (HDR) image frame in an image sensor comprising a pixel array with a plurality of pixels arranged in columns and rows comprises the steps of: exposing all rows of the pixel array for a long time to obtain long exposing information of an image frame; exposing all rows of the pixel array for a short time to obtain short exposing information of the image frame; and combining the long exposing information and the short exposing information.

For an image sensor, the exposure procedure is achieved by the following steps of: resetting the pixel array row by row from an initial row of the pixel array to be processed through an integration treatment; reading out the image data of the pixel array row by row from the initial row of the pixel array after a time cycle. It takes two time cycles to finish reading out the whole image data of the image frame.

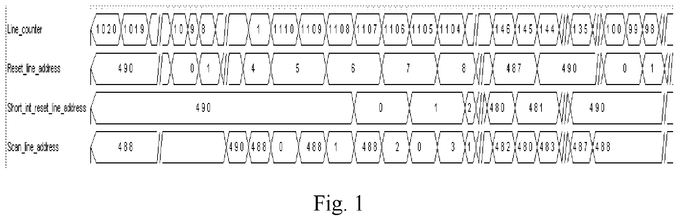

To reduce the time for reading out the data, a method for outputting an HDR image frame is provided in the prior art. Fig. 1 shows a sequence diagram of outputting an HDR image frame in the prior art. The first integration time of the current image frame is 10 time units, and according to the first integration time of the current image frame, the pixel array is reset row by row from an initial row of the pixel array to be processed through a first integration time resetting treatment when the row counting signal reaches Line_counter 10 in a time cycle. The first integration time of the current image frame is then compared with a first integration time of the next image frame (100 time units). To avoid two rows are reset to be processed through a first integration treatment at the same time, the frame length is adjusted to 1110 from 1020. So the pixel array will not be reset to be processed through a first integration treatment for the next image frame until all the valid rows of the pixel array have been reset to be processed through a first integration treatment and a second integration treatment for the current image frame.

In the prior art, the first integration time of the current image frame is T1; a second integration time of the current image frame is T2; a maximum second integration time is M; and the first integration time of the next image frame is T3. Particularly, T1 is 10 time units, T2 is 2 time units, M is 5 time units, and T3 is 100 time units.

It has been mentioned that the pixel array is reset row by row from the initial row of the pixel array to be processed through a first integration treatment for the current image frame when the row counting signal reaches Line_counter 10 in a first time cycle. When the row counting signal Line_counter reaches 1110 in a second time cycle, the first integration time image data of the current image frame is read out row by row from the initial row of the pixel array. Because the maximum second integration time M is 5, and the second integration time of the current image frame T2 is 2, the pixel array is reset row by row from an initial row of the pixel array to be processed through a second integration treatment when the row counting signal Line_counter reaches 1107 and the second integration image data is read out row by row from an initial row of the pixel array when the row counting signal Line_counter reaches 1105. The first integration image data or the second integration image data in a row is read out in a time unit. When the row counting signal Line_counter reaches an even number, a row in the pixel array is reset to be processed through a first integration treatment, or the first integration image data in another row is read out. When the row counting signal Line_counter reaches an odd number, a row in the pixel array is reset to be processed through a second integration treatment, or the second integration image data in another row is read out. Finally, the pixel array is reset row by row from the initial row of the pixel array to be processed through a first integration treatment for the next image frame when the row counting signal Line_counter reaches 100 in the second time cycle.

When the row counting signal Line_counter reaches 1106 in the second time cycle, the first integration image data in row 2 is read out and the row 7 in the pixel array is reset to be processed through a first integration treatment. When the row counting signal Line_counter reaches 1105 in the second time cycle, the second integration image data in row 0 is read out and the row 1 in the pixel array is reset to be processed through a second integration treatment. The pixel array will not be reset to be processed through a first integration treatment for the next image frame until all the valid rows of the pixel array have been reset to be processed through a first integration treatment and a second integration treatment for the current image frame. In the reset and read out procedure, the address of the row read out for the second integration image data of the current image frame is less than the address of the row reset to be processed through a second integration treatment; the row reset to be processed through a second integration treatment is less than the address of the row read out for the first integration image data of the current image frame; and the address of the row read out for the first integration image data of the current image frame is than the row reset to be processed through a first integration treatment.

In the prior art, the frame length is adjusted from 1020 to 1110, that is, the frame rate is decreased, which may not satisfy the requirements made by the National Television Standards Committee (NTSC) or the Phase Alternating Line (PAL) that the frame rate should be a constant when output. Furthermore, if a high dynamic image frame needs to be output, the image data, corresponding to image data of two image frames in a general mode, should be output in a frame time. The image data of one frame is a first integration time image data, and the image data of another frame is a second integration time image data. To obtain the high dynamic image data by reading out the first integration time image data and the second integration time image data in turn, and all the time for performing the first integration treatment should have identical parity, and all the time for performing the second integration treatment should have identical parity. So the object to output the high dynamic image data with random first integration time and random second integration time may not be achieved.

Furthermore, international patent application WO 97/17800 A1 is directed to an image sensor and discloses a method of reading out images with high dynamic range, comprising reading out images with different integration times during one image frame.

Furthermore, U.S. patent application US 2006/011810 A1 is directed to a wide dynamic range imager, wherein the image signals obtained with a first integration time and a second integration time, shorter than the first integration time, are sequentially read out by a single read out chain.

### SUMMARY

To solve at least one problem in the prior art, a method for reading out a high dynamic range image frame in an image sensor and a device using the same are provided.

The method for reading out a high dynamic range image frame in an image sensor comprising a pixel array with a plurality of pixels arranged in columns and rows comprises the steps of: a) confirming a first integration time and a second integration time smaller than the first integration time of the pixel array for each image frame; b) determining a start time of a first integration time resetting cycle of a current image frame corresponding to a first integration time T1 of the current image frame; c) determining a start time of a first integration time reading out cycle of the current image frame corresponding to a length L of the current image frame; d) determining a start time of a second integration time resetting cycle of the current image frame according to a second integration time T2 of the current image frame, the length of the current image frame and a maximum second integration time M, according to the formula L-(M-T2); e) determining a start time of a second integration time reading out cycle of the current image frame corresponding to the difference between the length of the current image frame and the maximum second integration time M; f) determining a start time of a first integration time resetting cycle of a next image frame corresponding to a first integration time T3 of the next image frame, wherein T3is greater than T1 and wherein the difference between the first integration time of the next image frame T3 and the first integration time of the current image frame T1 is greater than the idle time of the current image frame T4; g) resetting the pixel array row by row according to the start time of the first integration time resetting cycle of the current image frame to perform a first integration time resetting treatment for rows of the pixel array of the current image frame; h) reading out first integration time image data of the current image frame from the rows of the pixel array processed through the first integration time resetting treatment according to the start time of the first integration time reading out cycle of the current image frame; i) resetting the pixel array row by row according to the start time of the second integration resetting time cycle of the current image frame to perform a second integration time resetting treatment for rows of the pixel array of the current image frame; j) reading out second integration time image data of the current image frame from the rows of the pixel array processed through the second integration time resetting treatment according to the start time of the second integration time reading out cycle of the current image frame; and k) resetting the pixel array row by row according to the start time of the first integration resetting time cycle of the next image frame to perform a first integration time resetting treatment for rows of the pixel array of the next image frame, wherein the frame length L is constant for all image frames.

Preferably, the first integration time image data of the current image frame in the row N of the pixel array is read out in a current time unit, while the second integration time image data of the current image frame in the row (2N+1-M)/2 of the pixel array is read out in a next time unit, wherein N is an integer.

Preferably, when the first integration time image data of the first image frame in the row N of the pixel array is being read out in a current time unit, the row (N+T1/2) is reset in the current time unit to be processed through the first integration time resetting treatment for the current image frame, if T1 is an even number, and the row (N+(T1+1)/2) is reset in the next time unit to be processed through the first integration time resetting treatment for the current image frame, if T1 is an odd number.

Preferably, when the first integration time image data of the current image frame in the row N of the pixel array is being read out in a current time unit, the row (N-(M-T2-1)/2) is reset in a next time unit to be processed through the second integration time resetting treatment for the current image frame, if T2 is an even number, and the row (N-(M-T2)/2) is reset in the current time unit to be processed through the second integration time resetting treatment for the current image frame, if T2 is an odd number.

The method may further comprise a step of converting the first integration time image data and the second integration time image data into a first digital image signal and a second digital image signal respectively.

The method of claim may further comprise a step of resetting a vacancy row of the pixel array after valid rows of the pixel array have been reset or read out. The valid rows may comprise nonadjacent rows. Alternatively, the valid rows may comprise adjacent rows.

The device for reading out a high dynamic range image frame comprises: a pixel array comprising a plurality of pixels arranged in columns and rows; a calculating unit, configured to calculate and confirm a first integration time and a second integration time according to an output image frame information; and an integration time processing unit. The integration time processing unit is configured to: determine a start time of a first integration time resetting cycle of a current image frame corresponding to a first integration time T1 of the current image frame; determine a start time of a first integration time reading out cycle of the current image frame corresponding to a length L of the current image frame; determine a start time of a second integration time resetting cycle of the current image frame according to a second integration time T2 of the current image frame, the length of the current image frame and a maximum second integration time M, according to the formula L- (M-T2); determine a start time of a second integration time reading out cycle of the current image frame corresponding to the difference between the length L of the current image frame and the maximum second integration time M; determine a start time of a first integration time resetting cycle of a next image frame corresponding to a first integration time T3 of the next image frame, wherein the first integration time T3 of the next image frame is greater than the first integration time T1 of the current image frame, and wherein the difference between the first integration time of the next image frame T3 and the first integration time of the current image frame T1 is greater than the idle time of the current image frame T4; reset the pixel array row by row according to the start time of the first integration time resetting cycle of the current image frame to perform a first integration time resetting treatment for rows of the pixel array of the current image frame; read out first integration time image data of the current image frame from the rows of the pixel array processed through the first integration time resetting treatment according to the start time of the first integration time reading out cycle of the current image frame; reset the pixel array row by row according to the start time of the second integration resetting time cycle of the current image frame to perform a second integration time resetting treatment for rows of the pixel array of the current image frame; read out second integration time image data of the current image frame from the rows of the pixel array processed through the second integration time resetting treatment according to the start time of the second integration time reading out cycle of the current image frame; and reset the pixel array row by row according to the start time of the first integration resetting time cycle of the next image frame to perform a first integration time resetting treatment for rows of the pixel array of the next image frame, wherein the frame length L is constant for all image frames.

The device may further comprise a converting unit, configured to convert the first integration time image data and the second integration time image data into a first digital image signal and a second digital image signal respectively, and an image signal processing unit, configured to combine the first digital image signal and the second digital image into a combined image data and output the combined image data.

Preferably, when the first integration time image data of the first image frame in the row N - wherein N is an integer - of the pixel array is being read out in a current time unit by the integration time processing unit, if T1 is an even number, the row (N+T1/2) is reset in the current time unit by the integration time processing unit to be processed through the first integration time resetting treatment for the current image frame, and, if T1 is an odd number, the row (N+(T1+1)/2) is reset in a next time unit by the integration time processing unit to be processed through the first integration time resetting treatment for the first image frame.

Preferably, when the first integration time image data of the first image frame in the row N of the pixel array is being read out in a current time unit by the integration time processing unit, if T2 is an even number, the row (N-(M-T2-1)/2) is reset in a next time unit by the integration time processing unit to be processed through the second integration time resetting treatment for the first image frame, and, if T2 is an odd number, the row (N-(M-T2)/2) is reset in the current time unit by the integration time processing unit to be processed through the second integration time resetting treatment for the first image frame.

The integration time processing unit may be further configured to reset a vacancy row of the pixel array after valid rows of the pixel array have been reset or read out by the first and second integration processing unit. The valid rows may comprise nonadjacent rows. Alternatively, the valid rows may comprise adjacent rows.

According to the method in some embodiments of the present disclosure, the start time of the first integration time resetting cycle of the current image frame is determined according to the first integration time T1 of the current image frame; the start time of the first integration time reading out cycle of the current image frame is determined according to the length of the current image frame; the start time of the second integration time resetting cycle of the current image frame is determined according to the second integration time T2 of the current image frame, the length of the current image frame and the maximum second integration time M; the start time of the second integration time reading out cycle of the current image frame is determined according to the length of the current image frame and the maximum second integration time M; and the start time of the first integration time resetting cycle of the next image frame is determined according to the first integration time T3 of the next image frame. Therefore, when the pixel array may be processed through an integration treatment with a constant frame length, the pixel array may be completely reset to be processed through an integration treatment for the current image frame and the next image frame, whether the difference between the first integration time T3 of the next image frame and the first integration time T1 of the current image frame is large or small and whether the first integration time T1 of the current image frame, the second integration time T2 of the current image frame or the first integration time T3 of the next image frame is an odd number or an even number. So the image may be output completely and correctly with a constant frame rate while ensuring the quality of the image.

### BRIEF DESCRIPTION OF THE DRAWINGS

The foregoing summary, as well as the following detailed description of the disclosure, will be better understood when read in conjunction with the appended drawings. The embodiments illustrated in the figures of the accompanying drawings herein are by way of example and not by way of limitation. In the drawings:
Fig. 1 is a schematic integration sequence diagram of an image frame in the prior art;
Fig. 2 is a flow chart of a method for reading out a high dynamic range image frame in an image sensor in some embodiments of the present disclosure;
Fig. 3 is a schematic diagram of a device for reading out a high dynamic range image frame in some embodiments of the present disclosure;
Fig. 4 is a schematic integration sequence diagram for reading out a high dynamic range image frame in some embodiments of the present disclosure;
Fig. 5 is a partial enlarged diagram of Fig. 4;
Fig. 6 is a schematic integration sequence diagram for reading out a high dynamic range image frame according to an illustrative example, which is not part of the present disclosure; and Fig. 7 is a partial enlarged diagram of Fig. 6.

### DETAILED DESCRIPTION

The embodiments of the present disclosure now will be described in detail hereinafter with reference to the accompanying drawings, in which preferred embodiments of the disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art.

In some embodiments of the present disclosure, a first integration time of the current image frame is T1; a second integration time of the current image frame is T2; a maximum second integration time is M; a first integration time of the next image frame is T3 and an idle time of the current image frame is T4. The first integration time of the current image frame T1 is compared with the first integration time of the next image frame T3. If the first integration time of the current image frame T1 is less than the frame length of the current image frame, the first integration time of the next image frame T3 is greater than the first integration time of the current image frame T1, and the difference between the first integration time of the next image frame T3 and the first integration time of the current image frame T1 is greater than the idle time of the current image frame T4, a method for reading out a high dynamic range image frame in an image sensor may be provided as follows.

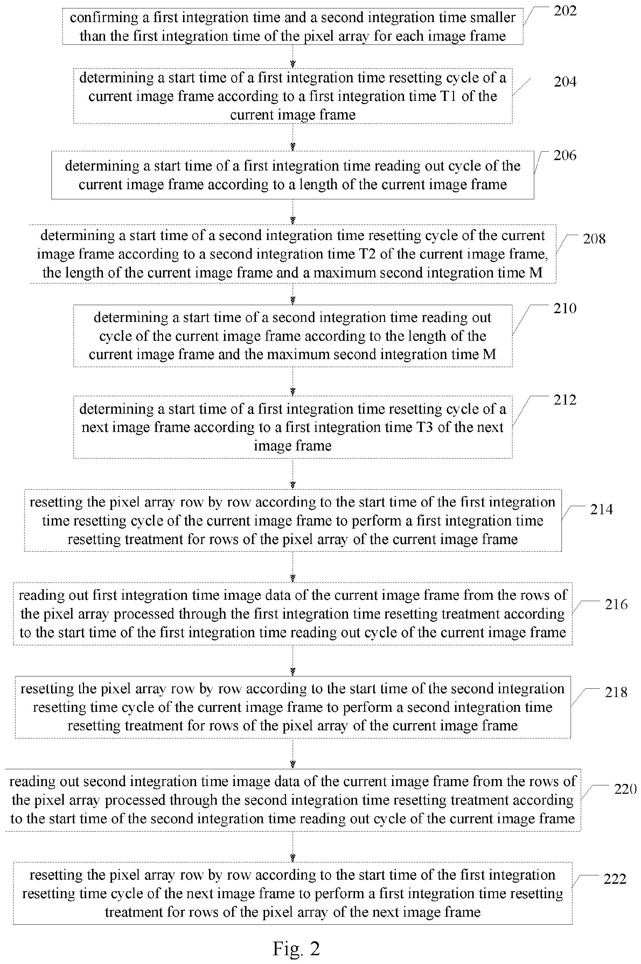

Referring to Fig. 2, the method for reading out a high dynamic range image frame in an image sensor with a pixel array comprising a plurality of pixels arranged in columns and rows, comprises the steps of: 202) confirming a first integration time and a second integration time smaller than the first integration time of the pixel array for each image frame; 204) determining a start time of a first integration time resetting cycle of a current image frame according to a first integration time T1 of the current image frame; 206) determining a start time of a first integration time reading out cycle of the current image frame according to a length of the current image frame; 208) determining a start time of a second integration time resetting cycle of the current image frame according to a second integration time T2 of the current image frame, the length of the current image frame and a maximum second integration time M; 210) determining a start time of a second integration time reading out cycle of the current image frame according to the length of the current image frame and the maximum second integration time M; 212) determining a start time of a first integration time resetting cycle of a next image frame according to a first integration time T3 of the next image frame; 214) resetting the pixel array row by row according to the start time of the first integration time resetting cycle of the current image frame to perform a first integration time resetting treatment for rows of the pixel array of the current image frame; 216) reading out first integration time image data of the current image frame from the rows of the pixel array processed through the first integration time resetting treatment according to the start time of the first integration time reading out cycle of the current image frame; 218) resetting the pixel array row by row according to the start time of the second integration resetting time cycle of the current image frame to perform a second integration time resetting treatment for rows of the pixel array of the current image frame; 220) reading out second integration time image data of the current image frame from the rows of the pixel array processed through the second integration time resetting treatment according to the start time of the second integration time reading out cycle of the current image frame; and 222) resetting the pixel array row by row according to the start time of the first integration resetting time cycle of the next image frame to perform a first integration time resetting treatment for rows of the pixel array of the next image frame.

In some embodiments of the present disclosure, if the frame length of the current image frame is L, the start time of the first integration time resetting cycle of the current image frame is the value of T1 in the first integration time resetting cycle of the current image frame, the start time of the second integration time resetting cycle of the current image frame is the value of the formula L - (M - T2) in the second integration time resetting cycle of the current image frame, and the start time of the first integration time resetting cycle of the next image frame is the value of T3 in the first integration time resetting cycle of the next image frame.

In some embodiments of the present disclosure, if the first integration image data of the current image frame in the row N of the pixel array is read out in the current time unit, the second integration image data of the current image frame in the row (2N+1-M)/2 of the pixel array may be read out in the next time unit. N is an integer, and the value of (2N+1-M)/2 is an integer.

In some embodiments of the present disclosure, when the first integration image data of the current image frame in the row N of the pixel array is being read out in the current time unit, if T1 is an even number, the row (N+T1/2) is reset in the current time unit to be processed through the first integration time resetting treatment for the current image frame; and if T1 is an odd number, the row (N+(T1+1)/2) is reset in the next time unit to be processed through the first integration time resetting treatment for the current image frame. N is an integer, the value of (N+T1/2) is an integer, and the value of (N+ (T1+1)/2) is an integer.

In some embodiments of the present disclosure, when the first integration image data of the current image frame in the row N of the pixel array is being read out in the current time unit, if T2 is an even number, the row (N-(M-T2-1)/2) is reset in the next time unit to be processed through the second integration time resetting treatment for the current image frame; and if T2 is an odd number, the row (N-(M-T2)/2) is reset in the current time unit to be processed through the second integration time resetting treatment for the current image frame. N is an integer, the value of (N-(M-T2-1)/2) is an integer, and the value of (N-(M-T2)/2) is an integer.

In some embodiments of the present disclosure, when the first integration image data in the row N of the pixel array is being read out in the current time unit, the row S of the pixel array is reset in the current time unit or in the next time unit to be processed through the first integration treatment for the next image frame. S is an integer.

In some embodiments of the present disclosure, S is less than or equal to (2N+1-M)/2; (2N+1-M)/2 is less than (N-(M-T2-1)/2) or (N-(M-T2)/2); (N-(M-T2-1)/2) or (N-(M-T2)/2) is less than or equal to N; and N is less than (N+T1/2) or (N+ (T1+1)/2). It means that in a unit time, the address (N+T1/2) or (N+ (T1+1)/2) of the row reset to be processed through the first integration treatment for the current image frame is greater than the address N of the row for reading out the first integration image data of the current image frame; the address N of the row for reading out the first integration image data of the current image frame is greater than or equal to the address (N-(M-T2-1)/2) or (N-(M-T2)/2) of the row reset to be processed through the second integration treatment for the current image frame; the address (N-(M-T2-1)/2) or (N-(M-T2)/2) of the row reset to be processed through the second integration treatment for the current image frame is greater than the address (2N+1-M)/2 of the row for reading out the second integration image data of the current image frame; and the address (2N+1-M)/2 of the row for reading out the second integration image data of the current image frame is greater than the address S of the row reset to be processed through the first integration treatment for the next image frame.

In some embodiments of the present disclosure, the method further comprises a step of converting the first integration time image data and the second integration time image data into a first digital image signal and a second digital image signal respectively. In some embodiments of the present disclosure, the method further comprises a step of combining the first digital image frame signal and the second digital image frame into a combined image data.

In some embodiments of the present disclosure, all rows that need to be processed through a first integration treatment for an image frame by the integration time processing unit are integrated for the identical first integration time T1. All rows that need to be processed through a second integration treatment by the integration time processing unit are integrated for the identical second integration time T2. The first integration time T1 is greater than or equal to the second integration time T2. The sequence of the rows for being reset is identical with the sequence of the rows for being read out the image data.

In some embodiments of the present disclosure, a valid row in the pixel array is the one that needs to be reset or read out, and a vacancy row of the pixel array is the one that does not need to be read out. In a time cycle, a vacancy row of the pixel array is reset after a valid row of the pixel array has been reset or the image data of the valid row of the pixel array has been read out. The vacancy row is reset to drain the accumulated charge in the vacancy row to avoid affecting the valid row adjacent to the vacancy row.

In some embodiments of the present disclosure, the valid rows comprise nonadjacent rows. In other embodiments of the present disclosure, the valid rows comprise adjacent rows.

According to the method in some embodiments of the present disclosure, the start time of the first integration time resetting cycle of the current image frame is determined according to the first integration time T1 of the current image frame; the start time of the first integration time reading out cycle of the current image frame is determined according to the length of the current image frame; the start time of the second integration time resetting cycle of the current image frame is determined according to the second integration time T2 of the current image frame, the length of the current image frame and the maximum second integration time M; the start time of the second integration time reading out cycle of the current image frame is determined according to the length of the current image frame and the maximum second integration time M; and the start time of the first integration time resetting cycle of the next image frame is determined according to the first integration time T3 of the next image frame. Therefore, when the pixel array may be processed through an integration treatment with a constant frame length, the pixel array may be completely reset to be processed through an integration treatment for the current image frame and the next image frame, whether the difference between the first integration time T3 of the next image frame and the first integration time T1 of the current image frame is large or small and whether the first integration time T1 of the current image frame, the second integration time T2 of the current image frame or the first integration time T3 of the next image frame is an odd number or an even number. So the image may be output completely and correctly with a constant frame rate while ensuring the quality of the image.

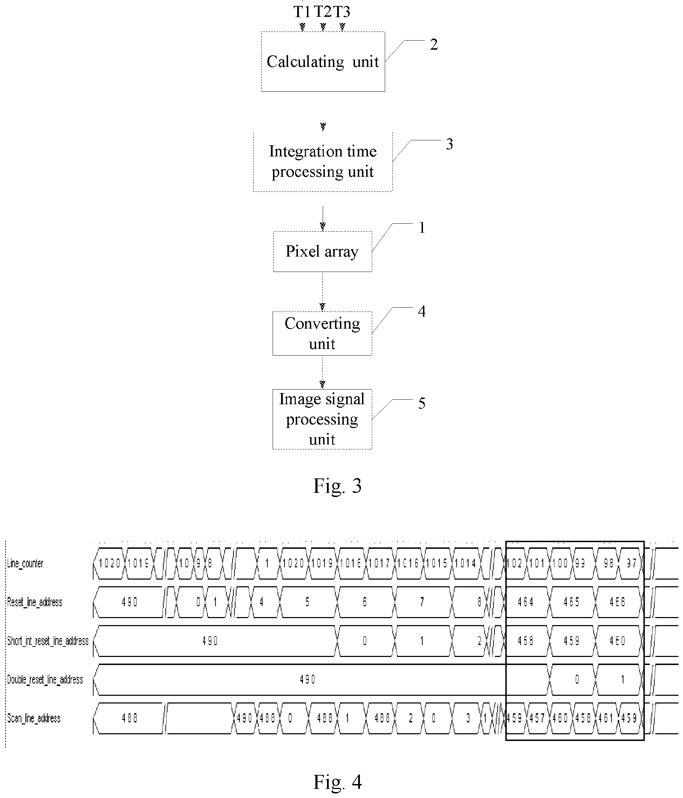

In some embodiment of the present disclosure, a device for reading out a high dynamic range image frame is provided. Referring to Fig. 3, the device comprises: a pixel array 1 comprising a plurality of pixels arranged in columns and rows; a calculating unit 2, configured to calculate and determine a first integration time and a second integration time according to an output image frame information; and an integration time processing unit 3. The first and second integration processing unit 3 is configured to: determine a start time of a first integration time resetting cycle of a current image frame according to a first integration time T1 of the current image frame; determine a start time of a first integration time reading out cycle of the current image frame according to a length of the current image frame; determine a start time of a second integration time resetting cycle of the current image frame according to a second integration time T2 of the current image frame, the length of the current image frame and a maximum second integration time M; determine a start time of a second integration time reading out cycle of the current image frame according to the length of the current image frame and the maximum second integration time M; reset the pixel array row by row according to the start time of the first integration time resetting cycle of the current image frame to perform a first integration time resetting treatment for rows of the pixel array of the current image frame; read out first integration time image data of the current image frame from the rows of the pixel array processed through the first integration time resetting treatment according to the start time of the first integration time reading out cycle of the current image frame; reset the pixel array row by row according to the start time of the second integration resetting time cycle of the current image frame to perform a second integration time resetting treatment for rows of the pixel array of the current image frame; read out second integration time image data of the current image frame from the rows of the pixel array processed through the second integration time resetting treatment according to the start time of the second integration time reading out cycle of the current image frame; and reset the pixel array row by row according to the start time of the first integration resetting time cycle of the next image frame to perform a first integration time resetting treatment for rows of the pixel array of the next image frame.

In some embodiments of the present disclosure, the device further comprises a converting unit 4, configured to convert the first integration time image data and the second integration time image data into a first digital image signal and a second digital image signal respectively; and an image signal processing unit 5, configured to combine the first digital image signal and the second digital image signal into a combined image data and output the combined image data. In some embodiments of the present disclosure, M is an odd number.

In some embodiments of the present disclosure, when the first integration time image data of the current image frame in the row N of the pixel array is read out in the current time unit by the integration time processing unit, the second integration time image data of the current image frame in the row (2N+1-M)/2 of the pixel array may be read out by the integration time processing unit in the next time unit. N is an integer, and the value of (2N+1-M)/2 is an integer.

In some embodiments of the present disclosure, when the first integration time image data of the current image frame in the row N of the pixel array is being read out in the current time unit by the integration time processing unit, if T1 is an even number, the row (N+T1/2) is reset in the current time unit by the integration time processing unit to be processed through the first integration time resetting treatment for the current image frame; and if T1 is an odd number, the row (N+ (T1+1)/2) is reset in the next time unit by the integration time processing unit to be processed through the first integration time resetting treatment for the first image frame. N is an integer, the value of (N+T1/2) is an integer, and the value of (N+ (T1+1)/2) is an integer.

In some embodiments of the present disclosure, when the first integration time image data of the first image frame in the row N of the pixel array is being read out in the current time unit by the integration time processing unit, if T2 is an even number, the row (N-(M-T2-1)/2) is reset in the next time unit by the integration time processing unit to be processed through the second integration time resetting treatment for the first image frame; and if T2 is an odd number, the row (N-(M-T2)/2) is reset in the current time unit by the integration time processing unit to be processed through the second integration time resetting treatment for the first image frame. N is an integer, the value of (N-(M-T2-1)/2) is an integer, and the value of (N-(M-T2)/2) is an integer.

In some embodiments of the present disclosure, when the first integration image data in the row N of the pixel array is being read out in the current time unit, the row S of the pixel array is reset in the current time unit or in the next time unit to be processed through the first integration treatment for the next image frame. S is an integer.

In some embodiments of the present disclosure, S is less than or equal to (2N+1-M)/2; (2N+1-M)/2 is less than (N-(M-T2-1)/2) or (N-(M-T2)/2); (N-(M-T2-1)/2) or (N-(M-T2)/2) is less than or equal to N; and N is less than (N+T1/2) or (N+ (T1+1)/2). It means that in a unit time, the address (N+T1/2) or (N+ (T1+1)/2) of the row reset to be processed through the first integration treatment for the current image frame is greater than the address N of the row for reading out the first integration image data of the current image frame; the address N of the row for reading out the first integration image data of the current image frame is greater than or equal to the address (N-(M-T2-1)/2) or (N-(M-T2)/2) of the row reset to be processed through the second integration treatment for the current image frame; the address (N-(M-T2-1)/2) or (N-(M-T2)/2) of the row reset to be processed through the second integration treatment for the current image frame is greater than the address (2N+1-M)/2 of the row for reading out the second integration image data of the current image frame; and the address (2N+1-M)/2 of the row for reading out the second integration image data of the current image frame is greater than the address S of the row reset to be processed through the first integration treatment for the next image frame.

In some embodiments of the present disclosure, all rows that need to be processed through a first integration treatment for an image frame by the integration time processing unit are integrated for the identical first integration time T1. All rows that need to be processed through a second integration treatment by the integration time processing unit are integrated for the identical second integration time T2. The first integration time T1 is greater than or equal to the second integration time T2. The sequence of the rows for being reset is identical with the sequence of the rows for being read out the image data.

In some embodiments of the present disclosure, a valid row in the pixel array is the one that needs to be reset or read out, and a vacancy row of the pixel array is the one that does not to be read out. In a time cycle, a vacancy row of the pixel array is reset after a valid row of the pixel array has been reset or the image data of the valid row of the pixel array has been read out. The vacancy row is reset to drain the accumulated charge in the vacancy row to avoid affecting the valid row adjacent to the vacancy row.

In some embodiments of the present disclosure, the valid rows comprise nonadjacent rows. In other embodiments of the present disclosure, the valid rows comprise adjacent rows.

With the device in some embodiments of the present disclosure, the start time of the first integration time resetting cycle of the current image frame is determined according to the first integration time T1 of the current image frame; the start time of the first integration time reading out cycle of the current image frame is determined according to the length of the current image frame; the start time of the second integration time resetting cycle of the current image frame is determined according to the second integration time T2 of the current image frame, the length of the current image frame and the maximum second integration time M; the start time of the second integration time reading out cycle of the current image frame is determined according to the length of the current image frame and the maximum second integration time M; and the start time of the first integration time resetting cycle of the next image frame is determined according to the first integration time T3 of the next image frame. Therefore, when the pixel array may be processed through an integration treatment with a constant frame length, the pixel array may be completely reset to be processed through an integration treatment for the current image frame and the next image frame, whether the difference between the first integration time T3 of the next image frame and the first integration time T1 of the current image frame is large or small and whether the first integration time T1 of the current image frame, the second integration time T2 of the current image frame or the first integration time T3 of the next image frame is an odd number or an even number. So the image may be output completely and correctly with a constant frame rate while ensuring the quality of the image.

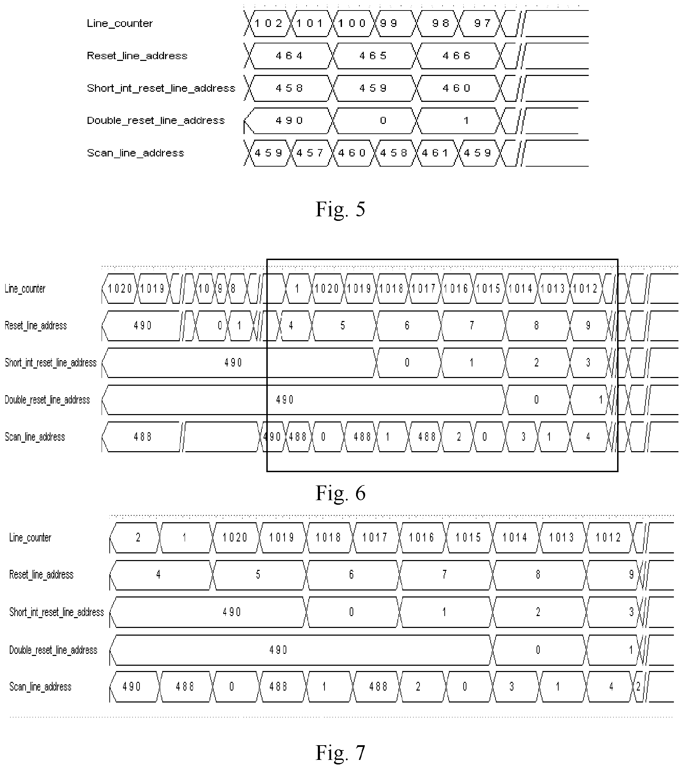

Referring to Fig. 4, and Fig. 5, an exemplary embodiments of the present disclosure is provided, while Fig. 6 and Fig. 7 are directed to an illustrative example, which is not part of the present invention. In Fig. 4, Fig. 5, Fig. 6, and Fig. 7, the Line_counter is a row counting signal, the Reset_line_address is the address of the row processed through a first integration treatment for the current image frame, the Short_int_reset_line_address is the address of the row processed through a second integration treatment for the current image frame, the Double_reset_line_address is the address of the row processed through a first integration treatment for the next image frame, and the Scan_line_address is the address of the row read out for the first integration image frame.

Fig. 4 is a schematic integration sequence diagram for reading out a high dynamic range image frame in some embodiments of the present disclosure. In this embodiment, the first integration time of the current image frame T1 is 10 time units, the second integration time of the current image frame T2 is 3 time units, the maximum second integration time M is 5 time units, and the first integration time of the next image frame T3 is 100 time units. The invalid time of the current image frame is 44 time units. The first integration time of the current image frame T1 is less than the frame length 1020 of the current image frame. Because the first integration time of the current image frame T1 is less than the first integration time of the next image frame T3, the difference between T3 and T1 is greater than the invalid time of the current image frame, and the values of T1 and T3 are even number, two rows are reset to perform a first integration treatment for the current image frame and the next image frame respectively at the same time if the frame length of the image frames are not changed. Furthermore, two rows are reset to perform first integration treatment for the current image frame and a second integration treatment for the current image frame respectively at the same time, and two rows are reset to perform a second integration treatment for the current image frame and a first integration treatment for the next image frame respectively at the same time. For example, when the row counting signal Line_counter reaches 100 in the second time cycle, the row 465 is reset to perform a first integration treatment for the current image frame, the row 458 is reset to perform a second integration treatment for the current image frame, and the row 0 is reset to perform a first integration treatment for the next image frame.

In this embodiment, according to T1, T2, T3 and M, the start time of the first integration time resetting cycle of the current image frame is 10 in the first integration time resetting cycle of the current image frame, the start time of the second integration time resetting cycle of the current image frame is 1020- (5 - 3) in the second integration time resetting cycle of the current image frame, and the start time of the first integration time resetting cycle of the next image frame is 100 in the first integration time resetting cycle of the next image frame. When the row counting signal Line_counter reaches 10 in the first time cycle, the pixel array is reset row by row from row 0 of the pixel array to be processed through a first integration time resetting treatment for the current image frame. After the first integration time of the current image frame has passed, that is, when the row counting signal Line_counter reaches 1020 in the second time cycle, the first integration time image data of the current image frame of the pixel array is read out row by row from row 0 of the pixel array. When the row counting signal Line_counter reaches 1018 in the second time cycle, the pixel array is reset row by row from the row 0 to be processed through a second integration time resetting treatment. After the second integration time of the current image frame has passed, that is, when the row counting signal Line_counter reaches 1015 in the second time cycle, the second integration time image data of the current image frame of the pixel array is read out row by row from row 0 of the pixel array. When the row counting signal Line_counter reaches 100 in the second time cycle, the pixel array is reset row by row from row 0 of the pixel array to be processed through a first integration treatment for the next image frame.

Referring to Fig. 5, when the row counting signal Line_counter reaches 100 in the second time cycle, the first integration time image data of the current image frame in row 460 is read out, and the row 465 is reset to perform a first integration treatment for the current image frame; when the row counting signal Line_counter reaches 99 in the second time cycle, the second integration time image data of the current image frame in row 458 is read out, and the row 459 is reset to perform a second integration treatment for the current image frame; and the row 0 is reset to perform a first integration treatment for the next image frame.

When the pixel array is reset or read out, when the row counting signal Line_counter reaches 100, the address of the row 0 reset to be processed through the first integration treatment for the next image frame is less than the address of the row 458 for reading out the second integration time image data of the current image frame; the address of the row 458 for reading out the second integration time image data of the current image frame is less than the address of the row 459 reset to be processed through the second integration treatment for the current image frame; the address of the row 459 reset to be processed through the second integration treatment for the current image frame is less than the address of the row 460 for reading out the first integration time image data of the current image frame; and the address of the row 460 for reading out the first integration time image data of the current image frame is less than the address of the row 465 reset to be processed through the first integration treatment for the current image frame.

Fig. 6 is a schematic integration sequence diagram for reading out a high dynamic range image frame according to an illustrative example, which is not part of the present invention. As shown in Fig. 6, the first integration time of the current image frame T1 is 10 time units, the second integration time of the current image frame T2 is 3 time units, the maximum second integration time M is 5 time units, and the first integration time of the next image frame T3 is 1014 time units. The invalid time of the current image frame is 44 time units. The first integration time of the current image frame T1 is less than the frame length 1020 of the current image frame. Because the first integration time of the current image frame T1 is less than the first integration time of the next image frame T3, the difference between T3 and T1 is greater than the invalid time of the current image frame, and the values of T1 and T3 are even number, two rows are reset to perform first integration treatment for the current image frame and the next image frame respectively at the same time if the frame length of the image frames are not changed. Furthermore, two rows are reset to perform a first integration treatment for the current image frame and a second integration treatment for the current image frame respectively at the same time and two rows are reset to perform a second integration treatment for the current image frame and a first integration treatment for the next image frame respectively at the same time. For example, when the row counting signal Line_counter reaches 1014 in the second time cycle, the row 8 is reset to perform a first integration treatment for the current image frame, the row 2 is reset to perform a second integration treatment for the current image frame, and the row 0 is reset to perform a first integration treatment for the next image frame.

In this embodiment, according to T1, T2, T3 and M, the start time of the first integration time resetting cycle of the current image frame is 10 in the first integration time resetting cycle of the current image frame, the start time of the second integration time resetting cycle of the current image frame is 1020- (5 - 3) in the second integration time resetting cycle of the current image frame, and the start time of the first integration time resetting cycle of the next image frame is 1014 in the first integration time resetting cycle of the next image frame. When the row counting signal Line_counter reaches 10 in the first time cycle, the pixel array is reset row by row from row 0 of the pixel array to be processed through a first integration time resetting treatment for the current image frame. After the first integration time of the current image frame has passed, that is, when the row counting signal Line_counter reaches 1020 in the second time cycle, the first integration time image data of the current image frame of the pixel array is read out row by row from row 0 of the pixel array. When the row counting signal Line_counter reaches 1018 in the second time cycle, the pixel array is reset row by row from the row 0 to be processed through a second integration time resetting treatment. After the second integration time of the current image frame has passed, that is, when the row counting signal Line_counter reaches 1015 in the second time cycle, the second integration time image data of the current image frame of the pixel array is read out row by row from row 0 of the pixel array. When the row counting signal Line_counter reaches 1014 in the second time cycle, the pixel array is reset row by row from row 0 of the pixel array to be processed through a first integration treatment for the next image frame.

Referring to Fig. 7, when the row counting signal Line_counter reaches 1014 in the second time cycle, the first integration time image data of the current image frame in row 3 is read out, and the row 8 is reset to perform a first integration treatment for the current image frame; when the row counting signal Line_counter reaches 1013 in the second time cycle, the second integration time image data of the current image frame in row 1 is read out, and the row 2 is reset to perform a second integration treatment for the current image frame; and the row 0 is reset to perform a first integration treatment for the next image frame.

When the pixel array is reset or read out, when the row counting signal Line_counter reaches 1014, the address of the row 0 reset to be processed through the first integration treatment for the next image frame is less than the address of the row 1 for reading out the second integration time image data of the current image frame; the address of the row 1 for reading out the second integration image data of the current image frame is less than the address of the row 2 reset to be processed through the second integration treatment for the current image frame; the address of the row 2 reset to be processed through the second integration treatment for the current image frame is less than the address of the row 3 for reading out the first integration time image data of the current image frame; and the address of the row 3 for reading out the first integration image data of the current image frame is less than the address of the row 8 reset to be processed through the first integration treatment for the current image frame.

It will be appreciated by those skilled in the art that changes could be made to the examples described above without departing from the broad inventive concept. It is understood, therefore, that this disclosure is not limited to the particular examples disclosed, but it is intended to cover modifications within the scope of the present disclosure as defined by the appended claims.

## Claims

1. A method for reading out a high dynamic range image frame in an image sensor comprising a pixel array (1) with a plurality of pixels arranged in columns and rows, the method comprising the steps of:
a) calculating and confirming a first integration time T1 and a second integration time T2 smaller than the first integration time of the pixel array (1) according to an output image frame information;
b) determining a start time of a first integration time resetting cycle of a current image frame corresponding to the first integration time T1 of the current image frame;
c) determining a start time of a first integration time reading out cycle of the current image frame corresponding to a length L of the current image frame, wherein the length L of the current image frame is the same as the length L of the next image frame; the method **characterised by**:
d) determining a start time of a second integration time resetting cycle of the current image frame according to the second integration time T2 of the current image frame, the length L of the current image frame and a maximum second integration time M, wherein the start time of the second integration time resetting cycle of the current image frame corresponds to L - (M-T2);
e) determining a start time of a second integration time reading out cycle of the current image frame according to the length L of the current image frame and the maximum second integration time M, wherein the start time of the second integration time reading out cycle of the current image frame corresponds to (L - M);
f) determining a start time of a first integration time resetting cycle of a next image frame corresponding to a first integration time T3 of the next image frame, wherein the first integration time T3 of the next image frame is greater than the first integration time T1 of the current image frame, and wherein the difference between the first integration time of the next image frame T3 and the first integration time of the current image frame T1 is greater than an idle time of the current image frame T4;
g) resetting the pixel array row by row according to the start time of the first integration time resetting cycle of the current image frame to perform a first integration time resetting treatment for rows of the pixel array (1) of the current image frame;
h) reading out first integration time image data of the current image frame from the rows of the pixel array processed through the first integration time resetting treatment according to the start time of the first integration time reading out cycle of the current image frame;
i) resetting the pixel array row by row according to the start time of the second integration resetting time cycle of the current image frame to perform a second integration time resetting treatment for rows of the pixel array of the current image frame;
j) reading out second integration time image data of the current image frame from the rows of the pixel array processed through the second integration time resetting treatment according to the start time of the second integration time reading out cycle of the current image frame; and
k) resetting the pixel array row by row according to the start time of the first integration resetting time cycle of the next image frame to perform a first integration time resetting treatment for rows of the pixel array of the next image frame.

2. The method of claim 1, wherein if the first integration time image data of the current image frame in the row N of the pixel array is read out in a current time unit, the second integration time image data of the current image frame in the row (2N+1-M)/2 of the pixel array is read out in a next time unit, wherein N is an integer.

3. The method of claim 1, wherein when the first integration time image data of the first image frame in the row N of the pixel array is being read out in a current time unit,
if T1 is an even number, the row (N+T1/2) is reset in the current time unit to be processed through the first integration time resetting treatment for the current image frame; and
if T1 is an odd number, the row (N+(T1+1)/2) is reset in the next time unit to be processed through the first integration time resetting treatment for the current image frame.

4. The method of claim 1, wherein when the first integration time image data of the current image frame in the row N of the pixel array is being read out in a current time unit,
if T2 is an even number, the row (N-(M-T2-1)/2) is reset in a next time unit to be processed through the second integration time resetting treatment for the current image frame;
if T2 is an odd number, the row (N-(M-T2)/2) is reset in the current time unit to be processed through the second integration time resetting treatment for the current image frame.

5. The method of claim 1, further comprising a step of converting the first integration time image data and the second integration time image data into a first digital image signal and a second digital image signal respectively.

6. The method of claim 1, further comprising a step of resetting a vacancy row of the pixel array after valid rows of the pixel array have been reset or read out.

7. The method of claim 6, wherein the valid rows comprise nonadjacent rows.

8. The method of claim 6, wherein the valid rows comprise adjacent rows.

9. A device for reading out a high dynamic range image frame, comprising:
a pixel array (1) comprising a plurality of pixels arranged in columns and rows;
a calculating unit (2), configured to calculate and confirm a first integration time T1 and a second integration time T2 according to an output image frame information, wherein the second integration time T2 is smaller than the first integration time T1 for each image frame; and
an integration time processing unit (3), configured to:
determine a start time of a first integration time resetting cycle of a current image frame corresponding to the first integration time T1 of the current image frame;
determine a start time of a first integration time reading out cycle of the current image frame corresponding to a length L of the current image frame, wherein the length L of the current image frame is the same as the length L of the next image frame; the device **characterised in that** the integration time processing unit (3) is further configured to:
determine a start time of a second integration time resetting cycle of the current image frame according to the second integration time T2 of the current image frame, the length L of the current image frame and a maximum second integration time M, wherein the start time of the second integration time resetting cycle of the current image frame corresponds to L - (M-T2);
determine a start time of a second integration time reading out cycle of the current image frame according to the length L of the current image frame and the maximum second integration time M, wherein the start time of the second integration time reading out cycle of the current image frame corresponds to (L - M);
determine a start time of a first integration time resetting cycle of a next image frame corresponding to a first integration time T3 of the next image frame, wherein the first integration time T3 of the next image frame is greater than the first integration time T1 of the current image frame and wherein the difference between the first integration time of the next image frame T3 and the first integration time of the current image frame T1 is greater than an idle time of the current image frame T4;
reset the pixel array row by row according to the start time of the first integration time resetting cycle of the current image frame to perform a first integration time resetting treatment for rows of the pixel array of the current image frame;
read out first integration time image data of the current image frame from the rows of the pixel array processed through the first integration time resetting treatment according to the start time of the first integration time reading out cycle of the current image frame;
reset the pixel array row by row according to the start time of the second integration resetting time cycle of the current image frame to perform a second integration time resetting treatment for rows of the pixel array of the current image frame;
read out second integration time image data of the current image frame from the rows of the pixel array processed through the second integration time resetting treatment according to the start time of the second integration time reading out cycle of the current image frame; and
reset the pixel array row by row according to the start time of the first integration resetting time cycle of the next image frame to perform a first integration time resetting treatment for rows of the pixel array of the next image frame.

10. The device of claim 9, further comprising:
a converting unit (4), configured to convert the first integration time image data and the second integration time image data into a first digital image signal and a second digital image signal respectively; and
an image signal processing unit (5), configured to combine the first digital image signal and the second digital image into a combined image data and output the combined image data.

11. The device of claim 9, wherein when the first integration time image data of the first image frame in the row N of the pixel array is being read out in a current time unit by the integration time processing unit (3),
if T1 is an even number, the row (N+T1/2) is reset in the current time unit by the integration time processing unit to be processed through the first integration time resetting treatment for the current image frame;
if T1 is an odd number, the row (N+(T1+1)/2) is reset in a next time unit by the integration time processing unit to be processed through the first integration time resetting treatment for the first image frame.

12. The device of claim 9, wherein when the first integration time image data of the first image frame in the row N of the pixel array is being read out in a current time unit by the integration time processing unit (3),
if T2 is an even number, the row (N-(M-T2-1)/2) is reset in a next time unit by the integration time processing unit to be processed through the second integration time resetting treatment for the first image frame;
if T2 is an odd number, the row (N-(M-T2)/2) is reset in the current time unit by the integration time processing unit to be processed through the second integration time resetting treatment for the first image frame.

13. The device of claim 9, wherein the integration time processing unit is further configured to reset a vacancy row of the pixel array after valid rows of the pixel array have been reset or read out by the first and second integration processing unit.

14. The device of claim 13, wherein the valid rows comprises non-adjacent rows.

15. The device of claim 13, wherein the valid rows comprises adjacent rows.

## Patentansprüche

1. Verfahren zum Auslesen eines Einzelbildes mit hochdynamischem Bereich in einem Bildsensor, der eine Pixelmatrix (1) mit mehreren Pixeln aufweist, die in Spalten und Zeilen angeordnet sind, wobei das Verfahren die Schritte aufweist:
a) Berechnen und Bestätigen einer ersten Integrationszeit T1 und einer zweiten Integrationszeit T2, die kleiner als die erste Integrationszeit der Pixelmatrix (1) ist, gemäß einer ausgegebenen Einzelbildinformation;
b) Bestimmen einer Startzeit eines ersten Integrationszeitzurücksetzungszyklus eines aktuellen Einzelbildes in Entsprechung zu der ersten Integrationszeit T1 des aktuellen Einzelbildes;
c) Bestimmen einer Startzeit eines ersten Integrationszeitauslesezyklus des aktuellen Einzelbildes in Entsprechung zu einer Länge L des aktuellen Einzelbildes, wobei die Länge L des aktuellen Einzelbildes mit der Länge L des nächsten Einzelbildes übereinstimmt; wobei zu dem Verfahren die Schritte gehören:
d) Bestimmen einer Startzeit eines zweiten Integrationszeitzurücksetzungszyklus des aktuellen Einzelbildes gemäß der zweiten Integrationszeit T2 des aktuellen Einzelbildes, der Länge L des aktuellen Einzelbildes und einer maximalen zweiten Integrationszeit M, wobei die Startzeit des zweiten Integrationszeitzurücksetzungszyklus des aktuellen Einzelbildes L - (M-T2) entspricht;
e) Bestimmen einer Startzeit eines zweiten Integrationszeitauslesezyklus des aktuellen Einzelbildes gemäß der Länge L des aktuellen Einzelbildes und der maximalen zweiten Integrationszeit M, wobei die Startzeit des zweiten Integrationszeitauslesezyklus des aktuellen Einzelbildes (L - M) entspricht;
f) Bestimmen einer Startzeit eines ersten Integrationszeitzurücksetzungszyklus eines nächsten Einzelbildes in Entsprechung zu einer ersten Integrationszeit T3 des nächsten Einzelbildes, wobei die erste Integrationszeit T3 des nächsten Einzelbildes größer ist als die erste Integrationszeit T1 des aktuellen Einzelbildes, und wobei die Differenz zwischen der ersten Integrationszeit des nächsten Einzelbildes T3 und der ersten Integrationszeit des aktuellen Einzelbildes T1 größer ist als eine Leerlaufzeit des aktuellen Einzelbildes T4;
g) Zurücksetzen der Pixelmatrix Zeile für Zeile gemäß der Startzeit des ersten Integrationszeitzurücksetzungszyklus des aktuellen Einzelbildes, um eine erste Integrationszeitzurücksetzungsbehandlung für Zeilen der Pixelmatrix (1) des aktuellen Einzelbildes durchzuführen;
h) Auslesen erster Integrationszeitbilddaten des aktuellen Einzelbildes von den Zeilen der Pixelmatrix, die durch die erste Integrationszeitzurücksetzungsbehandlung verarbeitet sind, gemäß der Startzeit des ersten Integrationszeitauslesezyklus des aktuellen Einzelbildes;
i) Zurücksetzen der Pixelmatrix Zeile für Zeile gemäß der Startzeit des zweiten Integrationszurücksetzungszeitzyklus des aktuellen Einzelbildes, um eine zweite Integrationszeitzurücksetzungsbehandlung für Zeilen der Pixelmatrix des aktuellen Einzelbildes durchzuführen;
j) Auslesen zweiter Integrationszeitbilddaten des aktuellen Einzelbildes von den Zeilen der Pixelmatrix, die durch die zweite Integrationszeitzurücksetzungsbehandlung verarbeitet sind, gemäß der Startzeit des zweiten Integrationszeitauslesezyklus des aktuellen Einzelbildes; und
k) Zurücksetzen der Pixelmatrix Zeile für Zeile gemäß der Startzeit des ersten Integrationszurücksetzungszeitzyklus des nächsten Einzelbildes, um eine erste Integrationszeitzurücksetzungsbehandlung für Zeilen der Pixelmatrix des nächsten Einzelbildes durchzuführen.

2. Verfahren nach Anspruch 1, wobei, falls die ersten Integrationszeitbilddaten des aktuellen Einzelbildes in der Zeile N der Pixelmatrix in einer aktuellen Zeiteinheit ausgelesen werden, die zweiten Integrationszeitbilddaten des aktuellen Einzelbildes in der Zeile (2N+1-M)/2 der Pixelmatrix in einer nächsten Zeiteinheit ausgelesen werden, wobei N eine ganze Zahl ist.

3. Verfahren nach Anspruch 1, wobei, wenn die ersten Integrationszeitbilddaten des ersten Einzelbildes in der Zeile N der Pixelmatrix in einer aktuellen Zeiteinheit gerade ausgelesen werden,
falls T1 eine gerade Zahl ist, die Zeile (N+T1/2) in der aktuellen Zeiteinheit zurückgesetzt wird, um durch die erste Integrationszeitzurücksetzungsbehandlung für das aktuelle Einzelbild verarbeitet zu werden; und
falls T1 eine ungerade Zahl ist, die Zeile (N+(T1+1)/2) in der nächsten Zeiteinheit zurückgesetzt wird, um durch die erste Integrationszeitzurücksetzungsbehandlung für das aktuelle Einzelbild verarbeitet zu werden.

4. Verfahren nach Anspruch 1, wobei, wenn die ersten Integrationszeitbilddaten des aktuellen Einzelbildes in der Zeile N der Pixelmatrix gerade in einer aktuellen Zeiteinheit ausgelesen werden,
falls T2 eine gerade Zahl ist, die Zeile (N-(M-T2-1)/2) in einer nächsten Zeiteinheit zurückgesetzt wird, um durch die zweite Integrationszeitzurücksetzungsbehandlung für das aktuelle Einzelbild verarbeitet zu werden;
falls T2 eine ungerade Zahl ist, die Zeile (N-(M-T2)/2) in der aktuellen Zeiteinheit zurückgesetzt wird, um durch die zweite Integrationszeitzurücksetzungsbehandlung für das aktuelle Einzelbild verarbeitet zu werden.

5. Verfahren nach Anspruch 1, ferner mit einem Schritt des Umwandeins der ersten Integrationszeitbilddaten und der zweiten Integrationszeitbilddaten in ein erstes digitales Bildsignal bzw. in ein zweites digitales Bildsignal.

6. Verfahren nach Anspruch 1, ferner mit einem Schritt des Zurücksetzens einer Leerstellenzeile der Pixelmatrix, nachdem gültige Zeilen der Pixelmatrix zurückgesetzt oder ausgelesen sind.

7. Verfahren nach Anspruch 6, wobei die gültigen Zeilen nichtbenachbarte Zeilen beinhalten.

8. Verfahren nach Anspruch 6, wobei die gültigen Zeilen benachbarte Zeilen beinhalten.

9. Vorrichtung zum Auslesen eines Einzelbildes mit hochdynamischem Bereich, enthaltend:
eine Pixelmatrix (1), die mehrere Pixel aufweist, die in Spalten und Zeilen angeordnet sind;
eine Berechnungseinheit (2), die dazu eingerichtet ist, eine erste Integrationszeit T1 und eine zweite Integrationszeit T2 gemäß einer ausgegebenen Einzelbildinformation zu berechnen und zu bestätigen, wobei die zweite Integrationszeit T2 für jedes Einzelbild kleiner als die erste Integrationszeit T1 ist; und
eine Integrationszeitverarbeitungseinheit (3), die für Folgendes ausgelegt ist,
Bestimmen einer Startzeit eines ersten Integrationszeitzurücksetzungszyklus eines aktuellen Einzelbildes in Entsprechung zu der ersten Integrationszeit T1 des aktuellen Einzelbildes;
Bestimmen einer Startzeit eines ersten Integrationszeitauslesezyklus des aktuellen Einzelbildes in Entsprechung zu einer Länge L des aktuellen Einzelbildes, wobei die Länge L des aktuellen Einzelbildes mit der Länge L des nächsten Einzelbildes übereinstimmt; wobei die Vorrichtung **dadurch gekennzeichnet ist, dass** die Integrationszeitverarbeitungseinheit (3) außerdem für Folgendes ausgelegt ist:
Bestimmen einer Startzeit eines zweiten Integrationszeitzurücksetzungszyklus des aktuellen Einzelbildes gemäß der zweiten Integrationszeit T2 des aktuellen Einzelbildes, der Länge L des aktuellen Einzelbildes und einer maximalen zweiten Integrationszeit M, wobei die Startzeit des zweiten Integrationszeitzurücksetzungszyklus des aktuellen Einzelbildes L - (M-T2) entspricht;
Bestimmen einer Startzeit eines zweiten Integrationszeitauslesezyklus des aktuellen Einzelbildes gemäß der Länge L des aktuellen Einzelbildes und der maximalen zweiten Integrationszeit M, wobei die Startzeit des zweiten Integrationszeitauslesezyklus des aktuellen Einzelbildes (L - M) entspricht;
Bestimmen einer Startzeit eines ersten Integrationszeitzurücksetzungszyklus eines nächsten Einzelbildes in Entsprechung zu einer ersten Integrationszeit T3 des nächsten Einzelbildes, wobei die erste Integrationszeit T3 des nächsten Einzelbildes größer als die erste Integrationszeit T1 des aktuellen Einzelbildes ist, und wobei die Differenz zwischen der ersten Integrationszeit des nächsten Einzelbildes T3 und der ersten Integrationszeit des aktuellen Einzelbildes T1 größer als eine Leerlaufzeit des aktuellen Einzelbildes T4 ist;
Zurücksetzen der Pixelmatrix Zeile für Zeile gemäß der Startzeit des ersten Integrationszeitzurücksetzungszyklus des aktuellen Einzelbildes, um eine erste Integrationszeitzurücksetzungsbehandlung für Zeilen der Pixelmatrix des aktuellen Einzelbildes durchzuführen;
Auslesen erster Integrationszeitbilddaten des aktuellen Einzelbildes von den Zeilen der Pixelmatrix, die durch die erste Integrationszeitzurücksetzungsbehandlung gemäß der Startzeit des ersten Integrationszeitauslesezyklus des aktuellen Einzelbildes verarbeitet sind;
Zurücksetzen der Pixelmatrix Zeile für Zeile gemäß der Startzeit des zweiten Integrationszurücksetzungszeitzyklus des aktuellen Einzelbildes, um eine zweite Integrationszeitzurücksetzungsbehandlung für Zeilen der Pixelmatrix des aktuellen Einzelbildes durchzuführen;
Auslesen erster Integrationszeitbilddaten des aktuellen Einzelbildes von den Zeilen der Pixelmatrix, die durch die zweite Integrationszeitzurücksetzungsbehandlung gemäß der Startzeit des zweiten Integrationszeitauslesezyklus des aktuellen Einzelbildes verarbeitet sind; und
Zurücksetzen der Pixelmatrix Zeile für Zeile gemäß der Startzeit des ersten Integrationszurücksetzungszeitzyklus des nächsten Einzelbildes, um eine erste Integrationszeitzurücksetzungsbehandlung für Zeilen der Pixelmatrix des nächsten Einzelbildes durchzuführen.

10. Vorrichtung nach Anspruch 9, ferner aufweisend:
eine Umwandlungseinheit (4), die dazu eingerichtet ist, die ersten Integrationszeitbilddaten und die zweiten Integrationszeitbilddaten in ein erstes digitales Bildsignal bzw. in ein zweites digitales Bildsignal umzuwandeln; und
eine Bildsignalverarbeitungseinheit (5), die dazu eingerichtet ist, das erste digitale Bildsignal und das zweite digitale Bild in zusammengeführte Bilddaten zusammenzuführen und die zusammengeführten Bilddaten auszugeben.

11. Vorrichtung nach Anspruch 9, wobei, wenn die ersten Integrationszeitbilddaten des ersten Einzelbildes in der Zeile N der Pixelmatrix gerade in einer aktuellen Zeiteinheit durch die Integrationszeitverarbeitungseinheit (3) ausgelesen werden,
falls T1 eine gerade Zahl ist, die Zeile (N+T1/2) in der aktuellen Zeiteinheit durch die Integrationszeitverarbeitungseinheit zurückgesetzt wird, um durch die erste Integrationszeitzurücksetzungsbehandlung für das aktuelle Einzelbild verarbeitet zu werden;
falls T1 eine ungerade Zahl ist, die Zeile (N+(T1+1)/2) in einer nächsten Zeiteinheit durch die Integrationszeitverarbeitungseinheit zurückgesetzt wird, um durch die erste Integrationszeitzurücksetzungsbehandlung für das erste Einzelbild verarbeitet zu werden.

12. Vorrichtung nach Anspruch 9, wobei, wenn die ersten Integrationszeitbilddaten des ersten Einzelbildes in der Zeile N der Pixelmatrix gerade in einer aktuellen Zeiteinheit durch die Integrationszeitverarbeitungseinheit (3) ausgelesen werden,
falls T2 eine gerade Zahl ist, die Zeile (N-(M-T2-1)/2) in einer nächsten Zeiteinheit durch die Integrationszeitverarbeitungseinheit zurückgesetzt wird, um durch die zweite Integrationszeitzurücksetzungsbehandlung für das erste Einzelbild verarbeitet zu werden;
falls T2 eine ungerade Zahl ist, die Zeile (N-(M-T2)/2) in der aktuellen Zeiteinheit durch die Integrationszeitverarbeitungseinheit zurückgesetzt wird, um durch die zweite Integrationszeitzurücksetzungsbehandlung für das erste Einzelbild verarbeitet zu werden.

13. Vorrichtung nach Anspruch 9, wobei die Integrationszeitverarbeitungseinheit ferner dazu eingerichtet ist, eine Leerstellenzeile der Pixelmatrix zurückzusetzen, nachdem gültige Zeilen der Pixelmatrix durch die erste und zweite Integrationsverarbeitungseinheit zurückgesetzt oder ausgelesen sind.

14. Vorrichtung nach Anspruch 13, wobei die gültigen Zeilen nicht benachbarte Zeilen beinhalten.

15. Vorrichtung nach Anspruch 13, wobei die gültigen Zeilen benachbarte Zeilen beinhalten.

## Revendications

1. Procédé de lecture d'une trame d'image à haute portée dynamique dans un capteur d'image comprenant une matrice de pixels (1) avec une pluralité de pixels disposés en colonnes et rangées, le procédé comprenant les étapes consistant à :
a) calculer et confirmer un premier temps d'intégration T1 et un second temps d'intégration T2 plus petit que le premier temps d'intégration de la matrice de pixels (1) selon une information de trame d'image de sortie ;
b) déterminer un temps de démarrage d'un premier cycle de réinitialisation de temps d'intégration d'une trame d'image actuelle correspondant au premier temps d'intégration T1 de la trame d'image actuelle ;
c) déterminer un temps de démarrage d'un premier cycle de lecture de temps d'intégration de la trame d'image actuelle correspondant à une longueur L de la trame d'image actuelle, dans lequel la longueur L de la trame d'image actuelle est la même que la longueur L de la trame d'image suivante, le procédé étant **caractérisé par** :
d) déterminer un temps de démarrage d'un second cycle de réinitialisation de temps d'intégration de la trame d'image actuelle selon le second temps d'intégration T2 de la trame d'image actuelle, la longueur L de la trame d'image actuelle et un second temps d'intégration maximal M, dans lequel le temps de démarrage du second cycle de réinitialisation de temps d'intégration de la trame d'image actuelle correspond à L -(M-T2) ;
e) déterminer un temps de démarrage d'un second cycle de lecture de temps d'intégration de la trame d'image actuelle selon la longueur L de la trame d'image actuelle et le second temps d'intégration maximal M, dans lequel le temps de démarrage du second cycle de lecture de temps d'intégration de la trame d'image actuelle correspond à (L-M) ;
f) déterminer un temps de démarrage d'un premier cycle de réinitialisation de temps d'intégration d'une trame d'image suivante correspondant à un premier temps d'intégration T3 de la trame d'image suivante, dans lequel le premier temps d'intégration T3 de la trame d'image suivante est supérieur au premier temps d'intégration T1 de la trame d'image actuelle, et dans lequel la différence entre le premier temps d'intégration de la trame d'image suivante T3 et le premier temps d'intégration de la trame d'image actuelle T1 est supérieure à un temps de veille de la trame d'image actuelle T4 :
g) réinitialiser la matrice de pixels rangée par rangée selon le temps de démarrage du premier cycle de réinitialisation de temps d'intégration de la trame d'image actuelle afin d'effectuer un premier traitement de réinitialisation de temps d'intégration pour des rangées de la matrice de pixels (1) de la trame d'image actuelle ;
h) lire des données d'image de premier temps d'intégration de la trame d'image actuelle d'après les rangées de la matrice de pixels traitées via le premier traitement de réinitialisation de temps d'intégration selon le temps de démarrage du premier cycle de lecture de temps d'intégration de la trame d'image actuelle ;
i) réinitialiser la matrice de pixels rangée par rangée selon le temps de démarrage du second cycle de réinitialisation de temps d'intégration de la trame d'image actuelle pour effectuer un second traitement de réinitialisation de temps d'intégration pour des rangées de la matrice de pixels de la trame d'image actuelle ;
j) lire des données d'images de second temps d'intégration de la trame d'image actuelle d'après les rangées de la matrice de pixels traitées via le second traitement de réinitialisation de temps d'intégration selon le temps de démarrage du second cycle de lecture de temps d'intégration de la trame d'image actuelle ; et
k) réinitialiser la matrice de pixels rangée par rangée selon le temps de démarrage du premier cycle de réinitialisation de temps d'intégration de la trame d'image suivante pour effectuer un premier traitement de réinitialisation de temps d'intégration pour des rangées de la matrice de pixels de la trame d'image suivante.

2. Procédé selon la revendication 1, dans lequel si les données d'image de premier temps d'intégration de la trame d'image actuelle dans la rangée N de la matrice de pixels sont lues dans une unité temporelle actuelle, les données d'image de second temps d'intégration de la trame d'image actuelle dans la rangée (2N+1-M)/2 de la matrice de pixels sont lues dans une unité temporelle suivante, dans lequel N est un entier.

3. Procédé selon la revendication 1, dans lequel lorsque les données d'image de premier temps d'intégration de la trame d'image actuelle dans la rangée N de la matrice de pixels est lue dans une unité temporelle actuelle,
si T1 est un nombre pair, la rangée (N+T1/2) est réinitialisée dans l'unité temporelle actuelle à traiter via le premier traitement de réinitialisation de temps d'intégration pour la trame d'image actuelle ; et
si T1 est un nombre impair, la rangée (N+(T1+1)/2) est réinitialisée dans l'unité temporelle suivante à traiter via le premier traitement de réinitialisation de temps d'intégration pour la trame d'image actuelle.

4. Procédé selon la revendication 1, dans lequel lorsque les données d'image de premier temps d'intégration de la trame d'image actuelle dans la rangée N de la matrice de pixels est lue dans une unité temporelle actuelle,
si T2 est un nombre pair, la rangée (N-(M-T2-1)/2) est réinitialisée dans une unité temporelle suivante à traiter via le second traitement de réinitialisation de temps d'intégration pour la trame d'image actuelle ;
si T2 est un nombre impair, la rangée (N-(M-T2)/2) est réinitialisée dans l'unité temporelle actuelle à traiter via le second traitement de réinitialisation de temps d'intégration pour la trame d'image actuelle.

5. Procédé selon la revendication 1, comprenant en outre une étape de conversion des données d'image de premier temps d'intégration et des données d'image de second temps d'intégration en un premier signal d'image numérique et un second signal d'image numérique respectivement.

6. Procédé selon la revendication 1, comprenant en outre une étape de réinitialisation d'une rangée vacante de la matrice de pixels après que des rangées valides de la matrice de pixels ont été réinitialisées ou lues.

7. Procédé selon la revendication 6, dans lequel les rangées valides comprennent des rangées non adjacentes.

8. Procédé selon la revendication 6, dans lequel les rangées valides comprennent des rangées adjacentes.

9. Dispositif de lecture d'une trame d'image à haute portée dynamique comprenant :
une matrice de pixels (1) comprenant une pluralité de pixels disposés en colonnes et rangées ;
une unité de calcul (2) configurée pour calculer et confirmer un premier temps d'intégration T1 et un second temps d'intégration T2 selon une information de trame d'image de sortie, dans lequel le second temps d'intégration T2 est plus petit que le premier temps d'intégration T1 pour chaque trame d'image ; et
une unité de traitement de temps d'intégration (3) configurée pour :
déterminer un temps de démarrage d'un premier cycle de réinitialisation de temps d'intégration d'une trame d'image actuelle correspondant au premier temps d'intégration T1 de la trame d'image actuelle ;
déterminer un temps de démarrage d'un premier cycle de lecture de temps d'intégration de la trame d'image actuelle correspondant à une longueur L de la trame d'image actuelle, dans lequel la longueur L de la trame d'image actuelle est la même que ma longueur L de la trame d'image suivante, le dispositif étant **caractérisé en ce que** l'unité de traitement de temps d'intégration (3) est en outre configurée pour :
déterminer un temps de démarrage d'un second cycle de réinitialisation de temps d'intégration de la trame d'image actuelle selon le second temps d'intégration T2 de la trame d'image actuelle, la longueur L de la trame d'image actuelle et un second temps d'intégration maximal M, dans lequel le temps de démarrage du second cycle de réinitialisation de temps d'intégration de la trame d'image actuelle correspond à L -(M-T2) ;
déterminer un temps de démarrage d'un second cycle de lecture de temps d'intégration de la trame d'image actuelle selon la longueur L de la trame d'image actuelle et le second temps d'intégration maximal M, dans lequel le temps de démarrage du second cycle de lecture de temps d'intégration de la trame d'image actuelle correspond à (L-M) ;
déterminer un temps de démarrage d'un premier cycle de réinitialisation de temps d'intégration d'une trame d'image suivante correspondant à un premier temps d'intégration T3 de la trame d'image suivante, dans lequel le premier temps d'intégration T3 de la trame d'image suivante est supérieur au premier temps d'intégration T1 de la trame d'image actuelle, et dans lequel la différence entre le premier temps d'intégration de la trame d'image suivante T3 et le premier temps d'intégration de la trame d'image actuelle T1 est supérieure à un temps de veille de la trame d'image actuelle T4 :
réinitialiser la matrice de pixels rangée par rangée selon le temps de démarrage du premier cycle de réinitialisation de temps d'intégration de la trame d'image actuelle afin d'effectuer un premier traitement de réinitialisation de temps d'intégration pour des rangées de la matrice de pixels (1) de la trame d'image actuelle ;
lire des données d'image de premier temps d'intégration de la trame d'image actuelle d'après les rangées de la matrice de pixels traitées via le premier traitement de réinitialisation de temps d'intégration selon le temps de démarrage du premier cycle de lecture de temps d'intégration de la trame d'image actuelle ;
réinitialiser la matrice de pixels rangée par rangée selon le temps de démarrage du second cycle de réinitialisation de temps d'intégration de la trame d'image actuelle pour effectuer un second traitement de réinitialisation de temps d'intégration pour des rangées de la matrice de pixels de la trame d'image actuelle ;
lire des données d'images de second temps d'intégration de la trame d'image actuelle d'après les rangées de la matrice de pixels traitées via le second traitement de réinitialisation de temps d'intégration selon le temps de démarrage du second cycle de lecture de temps d'intégration de la trame d'image actuelle ; et
réinitialiser la matrice de pixels rangée par rangée selon le temps de démarrage du premier cycle de réinitialisation de temps d'intégration de la trame d'image suivante pour effectuer un premier traitement de réinitialisation de temps d'intégration pour des rangées de la matrice de pixels de la trame d'image suivante.

10. Dispositif selon la revendication 9, comprenant en outre :
une unité de conversion (4) configuré pour convertir les données d'image de premier temps d'intégration et les données d'image de second temps d'intégration en un premier signal d'image numérique et un second signal d'image numérique respectivement ; et
une unité de traitement de signal d'image (5) configurée pour combiner le premier signal d'image numérique et le second signal d'image numérique en une données d'image combinée et délivrer la donnée d'image combinée.

11. Dispositif selon la revendication 9, dans lequel lorsque les données d'image de premier temps d'intégration de la première trame d'image dans la rangée N de la matrice de pixels sont lues dans une unité temporelle actuelle par l'unité de traitement de temps d'intégration (3),
si T1 est un nombre pair, la rangée (N+T1/2) est réinitialisée dans l'unité temporelle actuelle à traiter via le premier traitement de réinitialisation de temps d'intégration pour la trame d'image actuelle ; et
si T1 est un nombre impair, la rangée (N+(T1+1)/2) est réinitialisée dans l'unité temporelle suivante à traiter via le premier traitement de réinitialisation de temps d'intégration pour la trame d'image actuelle.

12. Dispositif selon la revendication 9, dans lequel lorsque les données d'image de premier temps d'intégration de la première trame d'image dans la rangée N de la matrice de pixels sont lues dans une unité temporelle actuelle par l'unité de traitement de temps d'intégration (3),
si T2 est un nombre pair, la rangée (N-(M-T2-1)/2) est réinitialisée dans une unité temporelle suivante à traiter via le second traitement de réinitialisation de temps d'intégration pour la trame d'image actuelle ;
si T2 est un nombre impair, la rangée (N-(M-T2)/2) est réinitialisée dans l'unité temporelle actuelle à traiter via le second traitement de réinitialisation de temps d'intégration pour la trame d'image actuelle.

13. Dispositif selon la revendication 9, dans lequel l'unité de traitement de temps d'intégration est en outre configuré pour réinitialiser une rangée vacante de la matrice de pixels après que des rangées valides de la matrice de pixels ont été réinitialisées ou lues par la première et la seconde unité de traitement d'intégration.

14. Dispositif selon la revendication 13, dans lequel les rangées valides comprennent des rangées non adjacentes.

15. Dispositif selon la revendication 13, dans lequel les rangées valides comprennent des rangées adjacentes.
